# NEUE EUROPÄISCHE PATENTSCHRIFT

(11) **EP 1 899 431 B2**
(45) Veröffentlichungstag und Bekanntmachung des Hinweises auf die Entscheidung über den Einspruch: **30.12.2015**
(45) Hinweis auf die Patenterteilung: 11.03.2009
(21) Anmeldenummer: 06762351.2
(22) Anmeldetag: 03.07.2006
(51) Int. Cl.: C09J 175/02

(54) **WARMHÄRTENDE LÖSUNGSMITTELFREIE EINKOMPONENTEN-MASSEN UND IHRE VERWENDUNG**
THERMOSETTING SOLVENT-FREE SINGLE-COMPONENT SUBSTANCES AND USE THEREOF
MASSES A UN SEUL CONSTITUANT DURCISSANT A CHAUD ET EXEMPTES DE SOLVANT ET UTILISATION DESDITES MASSES

(30) Priorität: 05.07.2005 DE 102005031381
(43) Veröffentlichungstag der Anmeldung: 19.03.2008
(73) Patentinhaber: DELO Industrieklebstoffe GmbH & Co. KG, 86899 Landsberg (DE)
(72) Erfinder: STUMBECK, Michael, 83024 Rosenheim (DE); KÖBLER, Jürgen, 82205 Gilching (DE)
(74) Vertreter: Prinz & Partner mbB
(86) Internationale Anmeldenummer: PCT/EP2006/006447
(87) Internationale Veröffentlichungsnummer: WO 2007/003392

(56) Entgegenhaltungen:
- EP-A- 0 367 478
- EP-A1- 0 255 572
- EP-B1- 0 873 369
- WO-A1-88/06165
- US-A- 3 426 097
- US-A- 4 595 445
- US-A- 4 737 565
- US-A- 4 778 845
- US-A- 5 235 062
- US-A- 5 747 581

## Beschreibung

Die Erfindung betrifft warmhärtende, lösungsmittelfreie Einkomponenten-Massen auf Basis von (Iso)cyanaten und latenten Härtern sowie ihre Verwendung zum Verkleben, Vergießen, Abdichten und Beschichten von Substraten. Solche Massen sind weit verbreitet und werden als Klebe- und Dichtmassen für Bauzwecke, als Konstruktionsklebstoffe oder als Verguss- und Beschichtungsmassen in der Elektronikindustrie eingesetzt.

Unter "(Iso)cyanaten" wird nachfolgend die Gruppe der Cyanate, Isocyanate und der Gemische aus Cyanaten und Isocyanaten verstanden, wobei sich die Schreibweise an die international übliche Schreibweise für die Gruppe der (Meth)acrylate anlehnt.

Unter "latenten Härtern" werden im Zusammenhang mit der vorliegenden Erfindung solche Härter verstanden, die unter Lagerbedingungen bis zu einer Temperatur von mindestens 40°C fest sind und über einen bestimmten Zeitraum inaktiv bleiben, aber in geschmolzenem, flüssigem Zustand bei einer für die Warmhärtung typischen Temperatur von zwischen 80 und 160°C aktiv werden und eine Polyadditions- und Vernetzungsreaktion zwischen Härter und (Iso)cyanat auslösen:
In dem Buch "Formulierung von Kleb- und Dichtstoffen" von B. Müller und W. Rath, 2004 erschienen im Vincentz-Verlag, Hannover, wird der Stand der Technik ausführlich beschrieben. Danach sind dem Fachmann zur Aushärtung folgende Methoden bekannt:

Bei zweikomponentigen Polyurethanmassen wird die erste, Isocyanat enthaltende Komponente vom Anwender mit einer zweiten Komponente gemischt und appliziert. Die zweite Komponente enthält als Härter in der Regel Hydroxygruppen enthaltende Verbindungen, häufig Polyetherpolyole oder Polyesterpolyole. Amine allein werden für zweikomponentige Polyurethane im Allgemeinen nicht verwendet, da die Reaktionsgeschwindigkeit so groß ist, dass eine sinnvolle Verwendung nicht mehr möglich ist. Deshalb werden oft Mischungen von Aminen mit Hydroxygruppen enthaltenden Verbindungen eingesetzt. Zweikomponentige Massen sind aber wegen des notwendigen Mischprozesses bei vielen Anwendungen, besonders im Elektronikbereich, unerwünscht.

Einkomponentige Isocyanatmassen können in Gegenwart von Wasser, z.B. in Form von Luftfeuchtigkeit, gehärtet werden. Dazu besteht beispielsweise die Möglichkeit, geblockte Amine einzusetzen, bei denen durch Umsetzung des Amins mit Ketonen oder Aldehyden Ketimine oder Enamine gebildet werden. Diese hydrolysieren bei Zutritt von Feuchtigkeit, und es tritt eine Umsetzung des freiwerdenden Amins mit dem Isocyanat ein. Nachteilig ist hier vor allem die Freisetzung von Aldehyden und Ketonen, die sowohl aus Arbeitsschutz- als auch aus Umweltschutzgründen vermieden werden sollten.

Es ist auch möglich, mittels Feuchtigkeit Isocyanate mit sich selbst reagieren zu lassen. Dabei bildet sich mit Feuchtigkeit die Carbaminsäure, die unter Abspaltung von Kohlendioxid zum Amin decarboxyliert. Dieses Amin reagiert mit dem Isocyanat dann zu einem Polyharnstoff. Durch das freigesetzte Kohlendioxid kommt es zum Aufschäumen der Massen, was für Isolierschäume im Baubereich willkommen ist, aber beispielsweise für Klebstoffe nicht akzeptabel ist.

Allgemein nachteilig bei der Feuchtigkeitshärtung sind der relativ langsame Härtungsfortschritt und die Abhängigkeit vom Grad der Luftfeuchtigkeit.

Eine weitere Möglichkeit zur Härtung einkomponentiger Isocyanatmassen ist die Anwendung von Wärme.

Von der Firma Crompton Chemical werden mit Natriumchlorid geblockte Amine angeboten. Diese Komplexe, die in Dioctylphthalat dispergiert werden, zerfallen bei Temperaturen zwischen 100°C und 160°C in das Amin und Natriumchlorid. Da für jede Amingruppe ein Molekül Natriumchlorid zum Blocken verwendet wird, ergibt sich daraus - abhängig vom jeweiligen Isocyanat -ein Anteil von mehreren Prozent Natriumchlorid in der ausgehärteten Masse. Zusammen mit dem Dispergiermittel, das gleichzeitig ein Weichmacher für Polymere darstellt und wie Natriumchlorid nicht an der Härtungsreaktion teilnimmt, ist der Anteil an nicht reagierten Bestandteilen in der ausgehärteten Masse bezüglich vieler Eigenschaften, wie z. B. Einstellung der Härte und Feuchtestabilität, sehr nachteilig. Besonders das Natriumchlorid ist für Elektronikanwendungen nachteilig, bei denen aufgrund der Korrosionsgefahr der Anteil von hydrolysierbarem Chlorid unter 100 ppm liegen sollte.

Geblockte Isocyanate werden für warmhärtende Massen in großem Umfang eingesetzt. Verwendet werden Addukte der Isocyanate mit Oximen, Phenolen, ε-Caprolactam, Diethylmalonat oder 3,5-Dimethylpyrazol. Auch dimere Isocyanate (Uretdion-Typen) werden zu dieser Gruppe gezählt. Die Deblockierungstemperaturen betragen je nach Art des Blockierungsmittels zwischen 100 und 180°C, wobei die Aushärtungsgeschwindigkeit durch die Geschwindigkeit der Abspaltung des Blockierungsmittels bestimmt wird. So sind beispielsweise 15 Minuten bei 150°C gängige Zeiten für die Härtung dieser Massen. Diese Zeiten sind jedoch für Anwendungen, bei denen es auf Geschwindigkeit ankommt, viel zu lang.

Aus der EP-A- 0 367 478 ist eine warmhärtende, lösungsmittelfreie, lagerstabile Einkomponenten-Masse aus einer Polyisocyanatkomponente und einer Stickstoffenthaltenden Härterkomponente bekannt. Die Härterkomponente ist bei Raumtemperatur flüssig.

Somit lassen sich die Nachteile der bisherigen Isocyanatmassen folgendermaßen zusammenfassen: die bekannten Massen sind zweikomponentig oder feuchtigkeitshärtend oder enthalten störende Spaltprodukte und sie sind, gleichgültig welche Härtungsmethode gewählt wird, zu langsam in der Aushärtungsgeschwindigkeit.

Es gibt auch bereits einkomponentige Epoxidharzmassen mit latenten Härtern, die als Klebstoffe oder Vergussmassen in der Technik, besonders in der Elektronikindustrie, breiten Einsatz gefunden haben. Die darin verwendeten latenten Härter bestehen aus stickstoffhaltigen Verbindungen, beispielsweise Dicyandiamid, aromatischen Aminen oder Imidazolen, die bei Raumtemperatur ungelöst im Klebstoff vorliegen und erst bei erhöhten Temperaturen aufschmelzen und dadurch zur Härtung der Epoxidharze zur Verfügung stehen. Diese Massen zeichnen sich zwar durch eine sehr gute Lagerstabilität aus, die Aushärtezeit liegt aber bei Temperaturen bis 150°C in der Regel im Minutenbereich.

Der Erfindung liegt die Aufgabe zugrunde, warmhärtende, lösungsmittelfreie, einkomponentige Massen auf Basis von (Iso)cyanaten und latenten Härtern bereitzustellen und Verfahren zu ihrer Verwendung vorzuschlagen, welche lagerstabil sind, aber dennoch viel schneller aushärten als die bekannten Isocyanatmassen und deshalb für viele Anwendungen interessante Alternativen zum Stand der Technik darstellen, insbesondere für Anwendungen in der Elektronikindustrie, bei denen große Stückzahlen von Bauteilen in sehr kurzer Zeit verklebt, vergossen oder beschichtet werden müssen.

Erfindungsgemäß gelöst wird diese Aufgabe durch warmhärtende, lösungsmittelfreie Einkomponenten-Massen gemäß Anspruch 1.

Die erfindungsgemäßen lösungsmittelfreien Massen liegen in Form eines lagerstabilen Einkomponenten-Gemischs vor und bedürfen zu ihrer Aushärtung nicht der Beimischung einer zweiten Komponente, sondern lediglich einer Erwärmung, die zum Aufschmelzen des bis zu einer Temperatur von mindestens 40°C festen latenten Härters führt, der dann in schmelzflüssiger Phase mit der (Iso)cyanat-Komponente durch Additionsvernetzung reagiert.

Als (Iso)cyanat (Bestandteil (A)) kommen vorzugsweise Verbindungen der Formeln Q(OCN)ₙ und Q(NCO)ₙ in Frage,
worin, jeweils unabhängig voneinander, n = 2 bis 5, vorzugsweise 2 oder 3, ist und
Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, oder einen aromatischen Kohlenwasserstoffrest mit 6-15, vorzugsweise 6-13 C-Atomen, bedeutet.

Beispielhafte Polycyanate sind 4,4'-Ethylidendiphenyldicyanat, das auch als "Bisphenol-E-Cyanatester" bezeichnet wird, Bisphenol-A-Cyanatester, Hexafluorobisphenol-A-Cyanatester, Tetramethylbisphenol-F-Cyanatester, Bisphenol-M-Cyanatester, Phenolnovolak-Cyanatester, Bisphenol-C-Cyanatester und Dicyclopentadienyl-phenol-Cyanatester. Auch oligomere Cyanatester wie Oligo(3-methylen-1,5-phenylencyanat) können eingesetzt werden.

Beispielhafte Polyisocyanate sind Hexamethylendiisocyanat, 1,12-Didecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan, Hexahydro-1,3 und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat oder Polyphenyl-polymethylenpolyisocyanate, wie sie durch Anilin-Formaldehyd-Kondensation und anschließende Phosgenierung erhalten werden.

Geeignete höhermolekulare Polyisocyanate sind Modifizierungsprodukte derartiger einfacher Polyisocyanate, d.h. Polyisocyanate mit z.B. Isocyanurat-, Carbodiimid-, Allophanat-, Biuret- oder Uretdion-Struktureinheiten, wie sie nach an sich bekannten Verfahren des Standes der Technik aus den beispielhaften genannten einfachen Polyisocyanaten der oben genannten allgemeinen Formel hergestellt werden können. Unter den höhermolekularen, modifizierten Polyisocyanaten sind insbesondere die aus der Polyurethanchemie bekannten Präpolymeren mit endständigen Isocyanatgruppen des Molekulargewichtsbereichs 400 bis 10000, vorzugsweise 600 bis 8000 und insbesondere 800 bis 5000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geblockte Isocyanate sind ebenfalls verwendbar, sofern die Schutzgruppe sich bei den Aushärtetemperaturen abspaltet. Dadurch kann zwar die Lagerstabilität verlängert werden, die Aushärtezeiten steigen aber.

Isocyanate mit zusätzlichen reaktiven Gruppen, zum Beispiel Acrylatgruppen, ermöglichen es, noch eine zusätzliche Vernetzung in Form eines interpenetrierenden Netzwerks einzuführen. Damit lässt sich beispielsweise ein hartes Acrylatnetzwerk mit einem flexiblen Polyharnstoffnetzwerk kombinieren.

Auch Mischungen zwischen Isocyanaten und Cyanaten können in jedem Mischungsverhältnis eingesetzt werden.

Als Bestandteil (B) eignen sich alle latenten Härter, die der eingangs genannten Definition entsprechen und dem Fachmann für einkomponentige Epoxidharze bekannt sind, beispielsweise Dicyandiamid, Guanidinderivate, Triazinderivate, Guanaminderivate, aliphatische Amine, cycloaliphatische Amine, aromatische Amine, Polyamidoamine, und Imidazole. Auch alle polymeren stickstoffhaltigen Verbindungen sind als latente Härter geeignet, sofern sie der genannten Definition entsprechen und eine Additionsreaktion möglich ist. Beispielsweise sind Addukte von Epoxidharzen mit den unterschiedlichen Aminen Stand der Technik. Auch werden Mischungen verschiedener latenter Härter angeboten, um die Geschwindigkeit der Härter zu variieren oder den Schmelzpunkt den Anforderungen entsprechend einzustellen.

Bevorzugt für die erfindungsgemäße Ausführung der Massen sind latente Härter mit einem Schmelzpunkt kleiner 150°C, besonders bevorzugt sind latente Härter mit einem Schmelzpunkt kleiner 110°C.

Der Anteil des Härters in der Masse richtet sich nach den Äquivalenten der verwendeten Härter und (Iso)cyanate, wobei der Härter entweder äquivalentmäßig ausgeglichen oder im Überschuss eingesetzt wird. Die latenten Härter werden in verschiedenen Teilchengrößen von den Herstellern angeboten. Besonders bevorzugt sind Härter mit einer Teilchengröße kleiner 10µm.

Überraschenderweise konnte festgestellt werden, dass die latenten Härter, die in Epoxidharzen eingesetzt werden, hervorragend dazu geeignet sind, sehr schnell härtende, einkomponentige Polyharnstoffklebstoffe herzustellen. Dabei wird der Nachteil der langsamen Härtung der einkomponentigen Polyurethanklebstoffe überwunden. Auch werden keinerlei Spaltungsprodukte frei. Feuchtigkeit ist zur Aushärtung ebenfalls nicht mehr notwendig. Im Vergleich zu den bekannten einkomponentigen Isocyanatmassen und zu den einkomponentigen mit latenten Härtern ausgestatteten Epoxidharzen sind diese neuen Massen um ein Vielfaches schneller und weisen eine anwendungsfreundliche Lagerstabilität auf.

Die erfindungsgemäßen Massen zeichnen sich durch folgende Vorteile aus:

Die Massen besitzen eine extrem hohe Aushärtegeschwindigkeit. Eine Masse gilt als ausgehärtet, wenn die Restenthalpie in einer DSC-Messung (Differential Scanning Calorimetry) weniger als 5% der Gesamtenthalpie beträgt. Bei 150°C sind Aushärtezeiten unter 30 Sekunden, bei bevorzugter Ausführung der erfindungsgemäßen massen sind Zeiten unter 15 Sekunden realisierbar. Bei 120°C liegen die Aushärtezeiten innerhalb von 60 Sekunden, bei bevorzugter Ausführung der erfindungsgemäßen Massen innerhalb von 30 Sekunden. Selbst bei 80°C sind Aushärtezeiten unter 10 Minuten möglich.

Diese genannten Aushärtezeiten beziehen sich auf eine Aushärtung in Konvektionsöfen. Durch alternative Aushärtemethoden wie IR-Strahler oder Thermodenaushärtung (Thermokompression) verringern sich die Aushärtezeiten noch einmal deutlich. Von besonderem Interesse ist dabei die Aushärtung mittels Thermokompression. Dabei werden an das Bauteil von oben und unten zwei beheizte Thermoden angedrückt. Durch diesen direkten Kontakt werden die Zeiten für die Aufheizung der Bauteile deutlich herabgesetzt. Diese Methode wird dann angewendet, wenn innerhalb kürzester Zeit möglichst viele Bauteile ausgehärtet werden sollen, zum Beispiel beim Verkleben von FlipChips auf das dazu gehörige Substrat. Mit den bisherigen Epoxidharzsystemen mussten Zeiten von 8 s bei Temperaturen über 180°C verwendet werden, um eine vollständige Aushärtung zu erzielen. Diese hohen Temperaturen sind aber bereits für viele Substrate schädlich. Außerdem wird die Aushärtung bei Zeiten größer 5 Sekunden zum geschwindigkeitsbestimmenden Schritt für die gesamte Anlage. Mit den erfindungsgemäßen Massen können Zeiten von 5 Sekunden bei 150°C bei diesen Anlagen erzielt werden. Zieht man die kurze Aufheizzeit der Bauteile von 1 bis 2 Sekunden ab, so findet die eigentliche Aushärtung in nur drei bis vier Sekunden statt.

Trotz dieser außergewöhnlichen Reaktionsgeschwindigkeit zeigen die Massen eine hervorragende Lagerstabilität bzw. Verarbeitungszeit von mindestens 2 Wochen bei Raumtemperatur oder vorzugsweise mindestens 3 Monaten bei 8°C. Lagerstabilitäten von 4 bis 6 Wochen bei Raumtemperatur (20 bis 25°C) bzw. 6 Monaten bei 4 bis 8°C sind erfindungsgemäß möglich; sogar eine. Lagertemperatur von 40°C ist für 48 Stunden möglich. Als lagerstabil werden dabei Massen angesehen, welche innerhalb der Lagerzeit im angegebenen Temperaturbereich die Viskosität nicht mehr als verdoppeln.

Im Rahmen der vorliegenden Erfindung können als Bestandteil (C) Epoxidharze eingesetzt werden. Da die als Bestandteil (B) genannten Härter ursprünglich für Epoxidharze eingesetzt wurden, ergibt sich hier die Möglichkeit, über die Härter zwei unterschiedliche Harzsysteme, (Iso)cyanate und Epoxide, in einer Masse zu kombinieren. Dadurch lassen sich die Eigenschaften der erfindungsgemäßen Massen nahezu beliebig hinsichtlich Festigkeiten, Haftung, Wasseraufnahme und Medienbeständigkeit variieren. Überraschenderweise wird die Geschwindigkeit der Aushärtung weiterhin von der Reaktion der (Iso)cyanate mit den Härtern bestimmt, die Reaktion der Epoxidharze mit den Härten wird also deutlich beschleunigt.

Bei den Epoxidharzen kann es sich sowohl um aliphatische, cycloaliphatische oder aromatische Epoxidharze handeln. Aliphatische Epoxidharze beinhalten Komponenten, die sowohl eine aliphatische Gruppe als auch mindestens zwei Epoxidharzgruppen tragen. Beispiele für aliphatische Epoxidharze können sein: Butandioldiglycidylether, Hexandioldiglycidylether, Dimethylpentandioxid, Butadiendioxid, Diethylenglycoldiglycidylether.

Cycloaliphatische Epoxidharze sind im Stand der Technik gut bekannt und beinhalten Stoffe, die sowohl eine cycloaliphatische Gruppe als auch mindestens 2 Oxiränringe tragen. Beispielhafte Vertreter sind 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-6-methylcyclohexancarboxylat, Vinylcyclohexandioxid, Bis(3,4-Epoxycyclohexylmethyl)adipat, Dicyclopentadiendioxid, 1,2-Epoxy-6-(2,3-epoxypropoxy)hexahydro-4,7-methanindan. Bevorzugt wird 3,4-Epoxycyclohexylmethyl-3',4'-epoxycylohexylcarboxylat eingesetzt.

Aromatische Epoxidharze können ebenso genutzt werden. Als Beispiele seien genannt Bisphenol-A-Epoxidharze, Bisphenol-F-Epoxidharze, Phenol-Novolac- Epoxidharze, Cresol-Novolac-Epoxidharze, Biphenylepoxidharze, Biphenolepoxidharze, 4,4'-Biphenyl-Epoxidharze, Divinylbenzoldioxid, 2-Glycidylphenylglycidylether. Auch polyfunktionelle Epoxidharze aller drei Harzgruppen, zäh elastifizierte Epoxidharze sowie Gemische verschiedener Harze können jederzeit eingesetzt werden.

Als Modifikatoren (Bestandteil (D)) können Füllstoffe, beispielsweise Quarzmehl, Silikate, Glasmehl, Teflonpulver, Keramikpulver, Metallpulver sowie Farbstoffe und Pigmente, beispielsweise Ruße, Metalloxide oder organische Farbstoffe und Pigmente eingesetzt werden. Stabilisatoren können einerseits dazu dienen, die Lagerstabilität zu erhöhen (z.B. leicht saure Verbindungen wie Toluolsulfonylisocyanat), andererseits um die gehärtete Masse vor thermischen Abbau oder durch UV-Strahlung zu schützen (z.B. sterisch gehinderte Phenole oder Amine). Auch Feuchtigkeit bindende Mittel sind für die Erhöhung der Lagerstabilität und der Vermeidung der Kohlendioxidbildung wichtige Modifikatoren. Als Beschleuniger sind Imidazole oder Harnstoffderivate wie Monuron oder Diuron verwendbar, aber auch dem Fachmann für Isocyanate bekannte Beschleuniger wie zum Beispiel Organozinnverbindungen. Zur Einstellung des Fließverhaltens können die dem Fachmann bekannten Fließverbesserer, Benetzungsmittel, Verdünnungs- und Verdickungsmittel sowie Thixotropierungsmittel eingesetzt werden. Dabei sind Kombinationen untereinander oder Kombinationen mit den anderen Modifikatoren entsprechend den anwendungstechnischen Erfordernissen verwendbar.

Die erfindungsgemäßen Massen eignen sich hervorragend als Klebstoffe, Vergussmassen und zum Abdichten bzw. Beschichten von Substraten. Besonders geeignet sind die Massen für Produktionsprozesse, bei denen große Stückzahlen in kurzer Zeit hergestellt werden müssen. Dies trifft besonders für elektronische Bauteile zu, beispielsweise beim Verkleben von so genannten Flip Chips auf Substraten, wie sie im Bereich der Smart Cards und Smart Labels verwendet werden.

Gegenstand der Erfindung ist deshalb auch die Verwendung der erfindungsgemäßen Massen für das Verkleben, Vergießen, Abdichten und Beschichten von Substraten, vorzugsweise mit den zusätzlichen Merkmalen der Patentansprüche 18 bis 20.

Die beschriebenen Massen zeichnen sich durch eine sehr gute Lagerstabilität von beispielsweise mehreren Monaten bei einer Temperatur zwischen 4 und 8°C bzw. von mehreren Wochen bei Raumtemperatur aus. Gleichzeitig besitzen die erfindungsgemäßen Massen niedrige Aushärtetemperaturen und kurze Aushärtezeiten, beispielsweise 15 Sekunden bei 150°C, bei Verwendung von Thermokompression 5 Sekunden bei 150°C. Gegenüber den bekannten Massen des Standes der Technik konnte die Differenz zwischen der Lagertemperatur und der Aushärtetemperatur verringert werden. Dies vereinfacht den Einsatz der erfindungsgemäßen Massen in technischen Prozessen, bei denen eine Tieftemperaturlagerung der Massen unerwünscht ist und gleichzeitig kurze Aushärtezeiten und niedrige Aushärtetemperaturen gefordert werden. Sowohl der Energieverbrauch als auch die benötigte Zeit für den Fügeprozess gestalten sich somit erfindungsgemäß günstiger.

Die Erfindung wird anhand der folgenden, nicht einschränkend zu versehenden Beispiele im Zusammenhang mit der Zeichnung erläutert.

Fig. 1 ist eine DSC (Differentialthermoanalysen)-Kurve, die den Umsatz der Epoxid-Polyamin-Reaktion gemäß Vergleichsbeispiel (Beispiel 1) in Abhängigkeit von der Härtungstemperatur zeigt;

Fig. 2 ist eine DSC-Kurve, die den Umsatz der Polyisocyanat-Polyamin-Reaktion gemäß Beispiel 2 (erfindungsgemäß) in Abhängigkeit von der Härtungstemperatur zeigt;

Fig. 3 zeigt zwei Graphen, die die Viskositätsänderungen der Vergleichsmasse (rechte Kurve) und der erfindungsgemäßen Masse (linke Kurve), jeweils in Abhängigkeit von der Härtungsdauer bei konstanter Temperatur, wiedergeben.

### Beispiel 1 (Vergleichsbeispiel)

Eine dem Stand der Technik entsprechende Masse bestehend aus einem Epoxidharz und einem latenten Härter soll als Vergleichsbeispiel gelten. Es setzt sich wie folgt zusammen:
67% Gemisch aus Bispenol-A- und Bispenol-F-Epoxidharz (EPR166 von Bakelite)
27% latenter, aminischer Härter (Ancamine 2014AS von Air Products)
3,5% Beschleuniger (Dicyandiamid Dyhard SF 100 von Degussa)
2,5% Thixotropierungsmittel (Cab-O-Sil M5 von Cabot)

Folgende Eigenschaften der Beispiele werden bestimmt:

### 1. Aushärtepeak

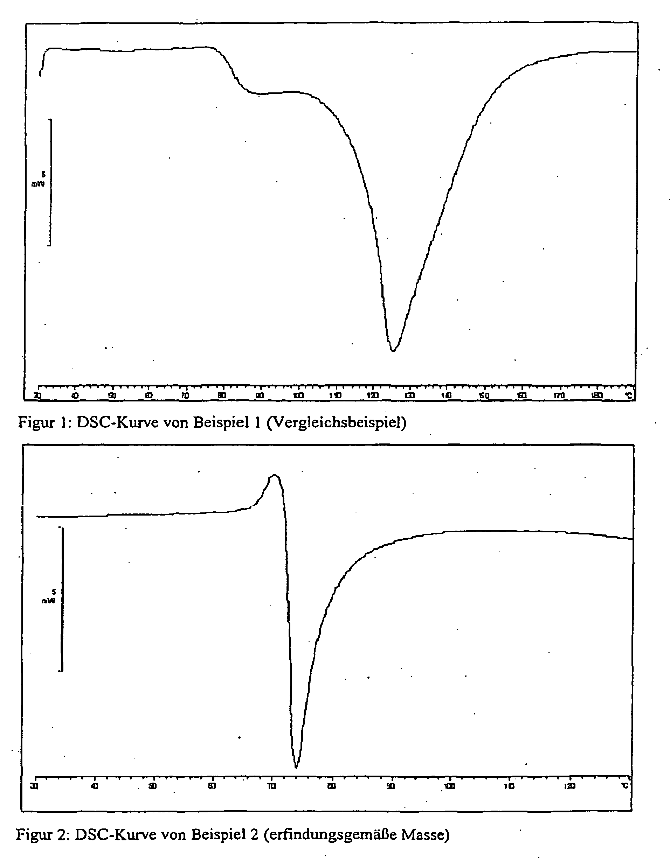

An einem DSC-Gerät des Typs DSC822 der Firma Mettler-Toledo (DSC=Differential Scanning Calorimetry, Differentialthermoanalyse) wird von der Vergleichsmasse der Reaktionspeak gemessen, der bei circa 125°C liegt, wie aus der in Fig. 1 dargestellten DSC-Kurve ersichtlich ist.

### 2. Aushärtegeschwindigkeit

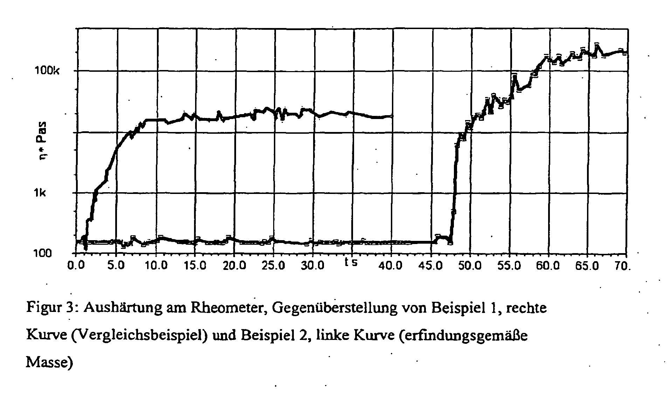

Am Rheometer der Firma Bohlin Instruments (Gerät Gemini) wird bei konstanter Temperatur die Aushärtegeschwindigkeit im Oszillationsmodus bestimmt. Während der Aushärtung kommt es zu einer starken Erhöhung der Viskosität. Als ausgehärtet gilt eine Masse, wenn es zu keiner Änderung in der Viskosität mehr kommt (Plateau in der Kurve, Fig. 3, rechte Kurve). Bei 150°C härtet das Vergleichsbeispiel in 60 Sekunden aus, bei 120°C in 8 Minuten und bei 80°C in 4 Stunden.

### 3. Lagerstabilität bzw. Verarbeitungszeit

An einem Rheometer wird die Viskosität in regelmäßigen Abständen von Lagerproben bestimmt. Dabei gilt eine Masse solange als verarbeitbar bzw. lagerstabil, bis sich ihre Viskosität verdoppelt hat. In Tabelle 1 findet sich eine Aufstellung der Lagerstabilitäten bzw. Verarbeitungszeiten.

### Beispiel 2

Die erfindungsgemäße Masse besteht aus folgenden Bestandteilen:
73,5% Polyisocyanat auf MDI-Basis (Desmodur VL R20 von Bayer)
24,5% latenter, aminischer Härter (Ancamine 2014AS von Air Products)
1,5% Thixotropierungsmittel (Cab-O-Sil M5 von Cabot)
0,5% Haftvermittler (Dynasilan Glymo von Degussa)

Die DSC-Kurve (Fig. 2) dieser Masse zeigt die Temperatur des Reaktionspeaks bei 74°C, also circa 50°C tiefer als beim Vergleichsbeispiel. Diese niedrigere Reaktionstemperatur macht sich deutlich in einer wesentlich höheren Reaktionsgeschwindigkeit als beim Vergleichsbeispiel bemerkbar. Nach den Rheometerkurven aus Fig. 3 ergibt sich für das Vergleichsbeispiel (rechte Kurve) bei 150°C eine Aushärtezeit von ungefähr 60 Sekunden, für die erfindungsgemäße Masse (linke Kurve in Fig. 3) aber eine Aushärtzeit von nur 10 Sekunden. Bei 120°C benötigt diese erfindungsgemäße Masse ca. 60 Sekunden zum Aushärten, bei 80°C 8 Minuten. Die Lagerstabilitäten bzw. Verarbeitungszeiten sind dabei annlich denjenigen des Vergleichsbeispiels. (Tabelle 1)

### Beispiel 3

Die erfindungsgemäße Masse besteht aus folgenden Bestandteilen:
65% Polyisocyanat auf IPDI-Basis (Desmodur VP LS 2371 von Bayer)
33% latenter, aminischer Härter (Adeka Hardener EH4337 von Asahi Denka)
1,5% Thixotropierungsmittel (Cab-O-Sil M5 von Cabot)
0,5% Haftvermittler (Dynasilan Glymo von Degussa)

In Tabelle 1 sind die wichtigsten Eigenschaften dieser Masse zusammengefasst.

### Beispiel 4

Die erfindungsgemäße Masse besteht aus folgenden Bestandteilen:
15% Gemisch aus Bisphenol-A- und F-Epoxidharz (EPR166 von Bakelite)
51% Polyisocyanat auf MDI-Basis (Desmodur VL R20 von Bayer)
30% latenter, aminischer Härter (Ancamine 2014AS von Air Products)
1,5% Thixotropierungsmittel (Cab-O-Sil M5 von Cabot)
0,5% Haftvermittler (Dynasilan Glymo von Degussa)
2% zähelastifiziertes Epoxidharz (Albipox 2000 von Hanse Chemie)

Mit diesem Beispiel kann gezeigt werden, dass sowohl Isocyanat als auch Epoxidharz mit dem latenten Härter reagieren, ohne dass es zu einem deutlichen Abfall der Reaktionsgeschwindigkeit kommt. In Tabelle 1 sind die wichtigsten Eigenschaften dieser Masse zusammengefasst.

### Beispiel 5

68% Novolak-Cyanatester (Primaset PT-90 von Ciba Speciality Chemicals)
30% latenter aminischer Härter (Ancamine 2014AS von Air Products, modifiziertes aliphatisches Polyaminaddukt)
1,5% Thixotropierungsmittel (Cab-O-Sil M5 von Cabot)
0,5% Haftvermittler (Dynasilan Glymo von Degussa)

Dieses Beispiel zeigt, dass Cyanate ebenfalls mit dem latenten Härter reagieren, wobei die Reaktionsgeschwindigkeit sogar etwas größer ist als bei Isocyanaten. Auch die Lagerstabilität ist etwas besser als bei Isocyanaten. In Tabelle 1 sind die wesentlichen Eigenschaften dieses Systems aufgeführt.

### Beispiel 6

Eine erfindungsgmäße Masse wird aus folgenden Bestandteilen hergestellt:
30% Novolak-Cyanatester (Primaset PT-90 von Ciba Speciality Chemicals)
38% Polyisocyanat auf MDI-Basis (Desmodur VL R20 von Bayer)
30% latenter aminischer Härter (Ancamine 2014AS von Air Products, modifiziertes aliphatisches Polyaminaddukt)
1,5% Thixotropierungsmittel (Cab-O-Sil M5 von Cabot)
0,5% Haftvermittler (Dynasilan Glymo von Degussa)

Dieses Beispiel zeigt, daß sowohl Isocyanat als auch Cyanat mit dem latenten Härter reagieren. In Tabelle 1 sind die wesentlichen Eigenschaften dieses Systems aufgeführt.

**Tabelle 1: Vergleich der Beispiele**

| | Beispiel 1 (Vergleich) | Beispiel 2 | Beispiel 3 | Beispiel 4 | Beispiel 5 | Beispiel 6 |
|---|---|---|---|---|---|---|
| Peaktemperatur DSC | 125°C | 74°C | Nicht bestimmt | Nicht bestimmt | 69°C | 72°C |
| Aushärtezeit bei 150°C | 60 Sekunden | 10 Sekunden | 20 Sekunden | 20 Sekunden | 8 Sekunden | 10 Sekunden |
| Aushärtezeit bei 120°C | 8 Minuten | 60 Sekunden | Nicht bestimmt | Nicht bestimmt | 50 Sekunden | 55 Sekunden |
| Aushärtezeit bei 80°C | 4 Stunden | 8 Minuten | Nicht bestimmt | Nicht bestimmt | 7 Minuten | 8 Minuten |
| Stabilität bei 40°C | 72 Stunden | 48 Stunden | 72 Stunden | 72 Stunden | 96 Stunden | 72 Stunden |
| Stabilität bei Raumtemperatur | 2 Wochen | 2 Wochen | 4 Wochen | 3 Wochen | 6 Wochen | 4 Wochen |
| Stabilität bei 8°C | 6 Monate | 4 Monate | 6 Monate | 6 Monate | 6 Monate | 6 Monate |

## Patentansprüche

1. Warmhärtende, lösungsmittelfreie Einkomponenten-Masse mit einer Lagerstabilität bei Raumtemperatur von mindestens 2 Wochen, bestehend aus
(A) 5 - 90 Masseteilen einer mindestens difunktionellen (Iso)cyanat-Komponente, ausgewählt aus der aus mindestens difunktionellen Cyanaten, mindestens difunktionellen Isocyanaten und deren Gemischen bestehenden Gruppe,
(B) 5 - 50 Masseteilen eines latenten, bis zu einer Temperatur von mindestens 40°C festen Härters auf Basis von Stickstoffverbindungen, die zur Additionsvernetzung geeignet sind,
(C) 0 - 50 Masseteilen einer epoxidhaltigen Verbindung,
(D) 0 - 50 Masseteilen von Modifikatoren, ausgewählt aus mindestens einer der Gruppen der Füllstoffe, Farbstoffe, Pigmente, Stabilisatoren, Feuchtigkeit bindenden Mittel, Beschleuniger, Fließverbesserer, Benetzungsmittel, Thixotropierungsmittel, Verdünnungsmittel und polymeren Verdickungsmittel,
wobei die Summe aller Masseteile 100 beträgt, und
wobei der latente Härter unter Lagerbedingungen bis zu einer Temperatur von mindestens 40°C fest ist, aber in geschmolzenem, flüssigem Zustand bei einer Temperatur von zwischen 80 und 160°C aktiv wird und eine Polyadditions- und Vernetzungsreaktion zwischen Härter und (Iso)cyanat-Komponente auslöst, jedoch keine Spaltungsprodukte freisetzt, und wobei der latente Härter keine Feuchtigkeit zur Aushärtung benötigt.

2. Masse nach Anspruch 1, **gekennzeichnet durch** eine Aushärtezeit bei 150°C unterhalb von 30 Sekunden, bei 120°C unterhalb von 60 Sekunden.

3. Masse nach Anspruch 2, **gekennzeichnet durch** eine Aushärtezeiten bei 150°C unterhalb von 15 Sekunden, bei 120°C unterhalb von 30 Sekunden.

4. Masse nach einem der Ansprüche 1 bis 3, **gekennzeichnet durch** eine Lagerstabilität bei 8°C von mindestens 3 Monaten.

5. Masse nach einem der Ansprüche 1 bis 4, **dadurch gekennzeichnet, dass** das Isocyanat aus Präpolymeren mit endständigen Isocyanatgruppen des Molekulargewichtsbereichs 400 bis 10000 besteht.

6. Masse nach Anspruch 5, **dadurch gekennzeichnet, dass** der Molekulargewichtsbereich 600 bis 8000 beträgt.

7. Masse nach Anspruch 5, **dadurch gekennzeichnet, dass** der Molekulargewichtsbereich 800 bis 5000 beträgt.

8. Masse nach einem der Ansprüche 1 bis 4, **dadurch gekennzeichnet, dass** das Cyanat aus Präpolymeren mit endständigen Cyanatgruppen des Molekulargewichtsbereichs 400 bis 10000 besteht.

9. Masse nach Anspruch 8, **dadurch gekennzeichnet, dass** der Molekulargewichtsbereich 600 bis 8000 beträgt.

10. Masse nach Anspruch 8, **dadurch gekennzeichnet, dass** der Molekulargewichtsbereich 800 bis 5000 beträgt.

11. Masse nach einem der Ansprüche 1 bis 10, **dadurch gekennzeichnet, dass** das Cyanat oder Isocyanat zusätzliche reaktive Gruppen enthält.

12. Masse nach Anspruch 11, **dadurch gekennzeichnet, daß** die zusätzlichen reaktiven Gruppen (Meth)acrylatgruppen sind.

13. Masse nach einem der Ansprüche 1 bis 4, **dadurch gekennzeichnet, dass** die (Iso)cyanat-Komponente eine Verbindung der Formeln Q(OCN)ₙ oder Q(NCO)ₙ ist,
worin, jeweils unabhängig voneinander, n = 2 bis 5 ist und
Q einen aliphatischen Kohlenwasserstoffrest mit 2-18 C-Atomen, einen cycloaliphatischen Kohlenwasserstoffrest mit 4-15 C-Atomen, oder einen aromatischen Kohlenwasserstoffrest mit 6-15 C-Atomen, bedeutet.

14. Masse nach einem der Ansprüche 1 bis 13, **dadurch gekennzeichnet, dass** der latente Härter einen Schmelzpunkt von kleiner 150°C aufweist

15. Masse nach Anspruch 14, **dadurch gekennzeichnet, daß** der Schmelzpunkt kleiner 110°C ist.

16. Masse nach einem der Ansprüche 1 bis 15, **dadurch gekennzeichnet, dass** der latente Härter eine Teilchengröße von kleiner 10 µm aufweist.

17. Verwendung der warmhärtenden, lösungsmittelfreien Masse gemäß einem der Ansprüche 1 bis 16 für das Verkleben, Vergießen, Abdichten und Beschichten von Substraten.

18. Verwendung nach Anspruch 17 für elektronische Bauteile.

19. Verwendung nach Anspruch 17 oder 18, bei der die Masse in einem Konvektionsofen bei einer Temperatur von maximal 150°C gehärtet wird.

20. Verwendung nach Anspruch 18 zum Verkleben von Flip Chips für Smart Cards und Smart Labels, wobei die Masse bei einer Temperatur von maximal 150°C mittels Thermokompression gehärtet wird.

## Claims

1. A thermosetting solvent-free single-component composition having a storage stability at room temperature of at least 2 weeks, consisting of
(A) 5 - 90 parts by weight of an at least difunctional (iso)cyanate component selected from the group consisting of at least difunctional cyanates, at least difunctional isocyanates and mixtures thereof,
(B) 5 - 50 parts by weight of a latent curing agent solid up to a temperature of at least 40 °C based on nitrogen compounds suitable for addition crosslinking,
(C) 0 - 50 parts by weight of an epoxy-containing compound,
(D) 0 - 50 parts by weight of modifiers selected from at least one of the groups of fillers, colorants, pigments, stabilizing agents, moisture-binding agents, accelerators, flow agents, wetting agents, thixotropic agents, diluents and polymeric thickening agents,
with the sum of all parts by weight being 100, and
the latent curing agent being solid under storage conditions up to a temperature of at least 40°C, but becoming active in a molten, liquid state at a temperature of between 80 and 160°C and causing a polyaddition and crosslinking reaction between the curing agent and the (iso)cyanate component, but not releasing any cleavage products, and the latent curing agent requiring no moisture for curing.

2. The composition of claim 1, **characterized by** a curing time of less than 30 seconds at 150 °C and of less than 60 seconds at 120 °C.

3. The composition of claim 2, **characterized by** a curing time of less than 15 seconds at 150 °C and of less than 30 seconds at 120 °C.

4. The composition of any one of claims 1 to 3, **characterized by** a storage stability of at least 3 months at 8 °C.

5. The composition of any one of claims 1 to 4, **characterized in that** the isocyanate consists of prepolymers having terminal isocyanate groups with a molecular weight ranging from 400 to 10,000.

6. The composition of claim 5, **characterized in that** the molecular weight ranges from 600 to 8,000.

7. The composition of claim 5, **characterized in that** the molecular weight ranges from 800 to 5,000.

8. The composition of any one of claims 1 to 4, **characterized in that** the cyanate consists of prepolymers having terminal cyanate groups with a molecular weight ranging from 400 to 10,000.

9. The composition of claim 8, **characterized in that** the molecular weight ranges from 600 to 8,000.

10. The composition of claim 8, **characterized in that** the molecular weight ranges from 800 to 5,000.

11. The composition of any one of claims 1 to 10, **characterized in that** the cyanate or isocyanate contains additional reactive groups.

12. The composition of claim 11, **characterized in that** the additional reactive groups are (meth)acrylate groups.

13. The composition of any one of claims 1 to 4, **characterized in that** the (iso)cyanate component is a compound of the formulae Q(OCN)ₙ or Q(NCO)ₙ,
wherein, each independently of each other, n = 2 to 5, and
Q is an aliphatic hydrocarbon residue having 2 to 18 C atoms, a cycloaliphatic hydrocarbon residue having 4 to 15 C atoms or an aromatic hydrocarbon residue having 6 to 15 C atoms.

14. The composition of any one of claims 1 to 13, **characterized in that** the latent curing agent has a melting point of less than 150 °C.

15. The composition of claim 14, **characterized in that** the melting point is less than 110 °C.

16. The composition of any one of claims 1 to 15, **characterized in that** the latent curing agent has a particle size of less than 10 µm.

17. Use of the thermosetting solvent-free composition according to any one of claims 1 to 16 for the bonding, casting, sealing and coating of substrates.

18. The use according to claim 17 for electronic parts.

19. The use according to claim 17 or claim 18, wherein the composition is cured in a convection oven at a temperature of, at maximum, 150 °C.

20. The use according to claim 18 for the bonding of flip chips for smart cards and smart labels, wherein the composition is cured at a temperature of, at maximum, 150 °C by means of thermocompression.

## Revendications

1. Masse à un composant, exempte de solvant et thermodurcissable présentant une stabilité à la conservation à une température ambiante d'au moins deux semaines, constituée par
(A) 5 à 90 parties en poids d'un composant (iso)cyanate au moins difonctionnel choisi dans le groupe constitué par des cyanates au moins difonctionnels, des isocynates au moins difonctionnels et leurs mélanges,
(B) 5 à 50 parties en poids d'un durcisseur latent, solide jusqu'à une température d'au moins 40°C, sur la base de composés d'azote qui conviennent pour la réticulation par addition,
(C) 0 à 50 parties en poids d'un composé epoxydique.
(D) 0 à 50 parties en poids d'agents modifiants choisis dans au moins un des groupes suivants: matières de charge, colorants, pigments, stabilisants, liants d'humidité, accélérateurs, fluidifiants, agents mouillants, agents thixotropiques, diluants et agents épaississants polymères,
la somme de toutes les parties en poids étant de 100, et
le durcisseur latent étant solide jusqu'à une température d'au moins 40°C sous des conditions de conservation mais devenant actif à l'état fondu liquide à une température entre 80 et 160°C et déclenchant une réaction de polyaddition et de réticulation entre le durcisseur et le composant (iso)cyanate, mais ne dégageant pas de produits de clivage, et le durcisseur latent ne nécessitant pas d'humidité pour le durcissement.

2. Masse selon la revendication 1, **caractérisée par** un temps de durcissement de moins de 30 secondes à 150°C, de moins de 60 secondes à 120°C.

3. Masse selon la revendication 2, **caractérisée par** un temps de durcissement de moins de 15 secondes à 150°C, de moins de 30 secondes à 120°C.

4. Masse selon l'une des revendications 1 à 3, **caractérisée par** une stabilité à la conservation d'au moins 3 mois à 8°C.

5. Masse selon l'une des revendications 1 à 4, **caractérisée en ce que** l'isocyanate est constitué par des prépolymères avec des groupes isocyanates terminaux de la gamme de poids moléculaire de 400 à 10000.

6. Masse selon la revendication 5, **caractérisée en ce que** la gamme de poids moléculaire est de 600 à 8000.

7. Masse selon la revendication 5, **caractérisée en ce que** la gamme de poids moléculaire est de 800 à 5000.

8. Masse selon l'une des revendications 1 à 4, **caractérisée en ce que** le cyanate est constitué par des prépolymères avec des groupes cyanates terminaux de la gamme de poids moléculaire de 400 à 10000.

9. Masse selon la revendication 8, **caractérisé en ce que** la gamme de poids moléculaire est de 600 à 8000.

10. Masse selon la revendication 8, **caractérisée en ce que** la gamme de poids moléculaire est de 800 à 5000.

11. Masse selon l'une des revendications 1 à 10, **caractérisée en ce que** le cyanate ou l'isocyanate contient des groupes réactifs additionnels.

12. Masse selon la revendication 11, **caractérisée en ce que** les groupes réactifs additionnels sont des groupes de (méth)acrylate.

13. Masse selon l'une des revendications 1 à 4, **caractérisée en ce que** le composant (iso)cyanate est un composé des formules Q(OCN)ₙ ou Q(NCO)ₙ,
dans lequel, indépendamment l'un de l'autre, n = 2 à 5, respectivement, et
Q signifie un radical hydrocarboné aliphatique avec 2 à 18 atomes de carbone, un radical hydrocarboné cycloaliphatique avec 4 à 15 atomes de carbone ou un radical hydrocarboné aromatique avec 6 à 15 atomes de carbone.

14. Masse selon l'une des revendications 1 à 13, **caractérisée en ce que** le durcisseur latent présente un point de fusion inférieur à 150°C.

15. Masse selon la revendication 14, **caractérisée en ce que** le point de fusion est inférieur à 110°C.

16. Masse selon l'une des revendications 1 à 15, **caractérisé en ce que** le durcisseur latent présente une dimension granulométrique inférieure à 10 µm.

17. Utilisation de la masse exempte de solvant et thermodurcissable selon l'une des revendications 1 à 16 pour le collage, le moulage par coulée, l'étanchement et le revêtement de substrats.

18. Utilisation selon la revendication 17 pour des composants électroniques.

19. Utilisation selon la revendication 17 ou 18 dans laquelle la masse est durcie dans un four à convection à une température de 150°C au maximum.

20. Utilisation selon la revendication 18 pour coller des puces à protubérance pour des cartes à puce intelligentes et des étiquettes intelligentes, la masse étant durcie par thermocompression à une température de 150°C au maximum.
